# EUROPEAN PATENT APPLICATION

(11) **EP 3 770 087 A1**
(43) Date of publication of application: **27.01.2021**
(21) Application number: 20187253.8
(22) Date of filing: 22.07.2020
(51) Int. Cl.: B65G 57/24, B65G 61/00

(54) **APPARATUS AND METHOD FOR THE FORMATION OF COMBINED LOAD UNITS**

(30) Priority: 22.07.2019 IT 201900012600
(71) Applicant: Elettric 80 S.p.A., 42030 Viano, Reggio Emilia (IT)
(72) Inventor: GRASSI, Enrico, 42030 Viano (Reggio Emilia) (IT); CAVIRANI, Vittorio, 42030 Viano (Reggio Emilia) (IT); GUIDI, Roberto, 42030 Viano (Reggio Emilia) (IT)
(74) Representative: Feltrinelli, Secondo Andrea

(57) **Abstract**

An apparatus (10) for the formation of combined load units (70) consisting of product packages of different types comprising one or more palletizers (PI, P2, P3), and an automated guided vehicles (40), an inlet conveyor (60) of single product layers, at least one palletizing conveyor (30), provided with at least one conveyor belt (32), a manipulator (80) provided with a device for moving layers (81) suitable to move a complete layer or a portion of layer of product packages, to at least one warehouse (20) for storing low-rotation products; methods for the formation of combined load units (70) by means of the apparatus (10) are also provided.

## Description

### TECHNICAL FIELD OF THE INVENTION

The present invention relates to an apparatus and a method for the formation of combined load units.

In particular, the apparatus according to the present invention can comprise warehouses, devices and automated guided vehicles for the formation of combined load units, *i.e.* mixed load units formed by products of different types.

### TECHNICAL BACKGROUND

In production plants, there is a need to make combinations of packages of different finished products in the same load unit, *i.e.* in the same palletized load, so that this load unit or palletized load may be thus sent directly to production plants or to an end user, for example to a distribution centre or to retail.

The packages of finished products are therefore depalletized from the original pallets, with which they arrived directly from the production or by a shipper or carrier, and are again palletized - immediately or at a later time - sorted and/or arranged as required, so that they may be shipped to customers who have ordered them, or may be stocked in shelves of a warehouse waiting for future sorting or shipping.

The reason for this depalletizing and the subsequent palletizing consists in the fact that the packages of finished products cannot always be shipped as they were received, because the aforementioned packages are arranged in pallets formed by articles of the same type, *i.e.* homogeneous by type of products, while customers' orders can be composed of combined or mixed articles.

Therefore, starting from the pallets received with lots of homogeneous articles, the goods must be sorted into lots of mixed or heterogeneous articles which represent the customers' orders.

Below are known processes for obtaining such mixed or combined load units. According to a known type of process, a depalletizing and a simultaneous layer palletizing are performed, this process being also called *layer picking.*

Therefore, a formation of mixed or combined load units is provided by a depalletizing of the load units with products of the same or homogeneous type and a simultaneous palletizing on the new combined load unit to be made, this load unit being formed with different types of products taken from the load units with homogeneous products.

This process entails the use of a depalletizing device, for example a gripper, which allows the depalletizing of a layer from a load unit with homogeneous products and a palletizing on a proper support, for example a pallet, or on the last layer of the load unit in progress.

The depalletizing device can be mounted on an anthropomorphic robot or on a Cartesian manipulator, in this case the load units are transferred to the work area by means of manually or automated guided vehicles or by means of proper conveyor means.

Alternatively, the depalletizing device can be mounted directly on a manually or automated guided vehicle, in this case the load units can remain stationary during the transfer operations of the package layer and are moved only once the transfer operations are exhausted or finished.

The load units of homogeneous products, before being transferred to the work area, must be treated, manually, to remove the plastic film or the straps for stabilization and protection wrapped around the load unit.

Normally, the load units thus treated are also transferred to a storage area near the work area to feed them quickly.

The types of grippers can be different depending on the types of products to be moved: for example, grippers that use the vacuum to support the layer can be used, grippers with movable shoulders that support the layer by pressure or grippers with roller tables which can slip under the layer separating it from the one below and supporting it positively.

A process of the type here described entails limits in the type of products that can be treated and may not be reliable with certain types of products or involve risks of damaging the products themselves.

Furthermore, there are limitations in the treatment of load units with different layer dimensions and in terms of possible palletizing schemes of the load units, a considerable space is required both for the installation of the depalletizer-palletizer and for the area intended to the storage of the treated load units, and it is normally necessary a manual processing of the load units of uniform products to perform the removal of the film/strap (complete or partial).

According to another process of the known type, depalletizing and subsequent palletizing take place simultaneously in rows - this process being also called *case picking.*

This process provides the depalletizing of uniform or homogeneous load units in single rows and the simultaneous new palletizing of the combined or mixed load units.

The process entails the use of a depalletizing device, for example a gripper, which allows to depalletize a row of packages from a load unit and to palletize it on a proper support (pallet) or on the last layer of the load units to be made.

Also in this case, the depalletizing device can be mounted on an anthropomorphic robot or on a Cartesian manipulator.

The aforementioned process entails limits in the type of products that can be treated, may not be reliable with certain types of products, may have limitations in terms of possible palletizing schemes of the load units.

Furthermore, this process requires significant space both for the installation of the depalletizer/palletizer and for the area intended to the storage of the treated load units.

This process, too, requires a manual treatment of the load units of uniform products to perform the complete or partial film/straps removal.

According to another process of the known type, depalletizing and palletizing take place not simultaneously.

The process provides depalletizing of uniform load units in layers or in rows and the subsequent movement of the packages towards the palletizing after eventually treating them to manage them in the most appropriate way: singularized, aligned, spaced, rotated, accumulated, etc.

The palletizing of the combined load units in this case is done not simultaneously with depalletizing.

This process, too, normally entails a depalletizing device, for example a first type of gripper, dedicated to depalletizing and a different palletizing device, for example a second type of gripper different from the first, dedicated to palletizing of the packages.

In both cases the depalletizing and palletizing devices can be mounted on a respective anthropomorphic robot or Cartesian manipulator.

This process, too, entails limits in the type of products that can be treated, may not be reliable with some types of products and requires significant space both for the installation of the depalletizing device and the palletizing device and for the area intended to the storage of the treated load units.

This process, too, normally requires the need for a manual treatment of the load units of uniform products in order to perform the complete or partial removal of the film/strap.

All the aforementioned processes also have an important common disadvantage: for the realization of the combined load units it is necessary to use load units of uniform products previously palletized, wrapped with plastic film and/or provided with straps and labelled, with a considerable waste of time, material and energy.

### OBJECTS OF THE INVENTION

The aim of the present invention is to improve the state of the art in the field of apparatuses and methods for the formation of combined load units and in the field of automatic warehouses provided with such devices.

Within such technical aim, it is an object of the present invention to provide an apparatus and a method for the formation of combined load units which allow to overcome the above-mentioned drawbacks.

Another object of the present invention is to develop an apparatus and a method for the formation of combined load units which allow to eliminate the need to use equipment and devices, such as depalletizers or the like, to be able to use packages or layers of products already grouped in uniform load units.

Yet another object of the present invention is to develop an apparatus and a method for the formation of combined load units which allow to form combined load units using packages of products or product layers that come directly from the productive stations of the plant, without these being subjected to preparatory treatments or previously grouped in uniform load units.

A further object of the present invention is to provide an apparatus and a method for the formation of combined load units which allow to reduce the use of the spaces within the production plants.

Another object of the present invention is to provide an apparatus and a method for the formation of combined load units that allow to treat, with equal effectiveness and in a versatile way, types of products of different nature and/or with different composition schemes of the combined load units.

According to an aspect of the present invention, an apparatus for the formation of combined load units is provided according to claim 1.

In connection with other aspects of the present invention, methods for the formation of combined load units are presented according to one of the independent claims 8 to 10.

The dependent claims refer to preferred and advantageous embodiments of the invention.

### BRIEF DESCRIPTION OF THE DRAWINGS

The features of the invention will be better understood by anyone skilled in the art from the description below and the accompanying drawings, given as a non-limiting example, wherein:
figure 1 is a plan view of an apparatus according to the present invention;
figure 2 is an axonometric top view of an apparatus as per figure 1;
figure 3 is an axonometric side view from the left side of an apparatus as per the preceding figures;
figure 4 is an axonometric side view from the right side of an apparatus as per the preceding figures;
figure 5 is a plan view of a productive plant comprising the apparatus according to the present invention;
figure 6 is an axonometric view of the productive plant of figure 5;
figure 7 is an axonometric view, from a different angle, of the productive plant of figure 5;
figure 8 is a detailed axonometric view of a first palletizer of the apparatus;
figure 9 is a detailed axonometric view of a second palletizer of the apparatus;
figure 10 is a detailed axonometric view of a third palletizer of the apparatus.

### EMBODIMENTS OF THE INVENTION

In the present description, with load unit is meant the set of packages of finished products, both those destined directly to the market of the end users and those intended as auxiliary materials to production plants; moreover, product packages are made up of boxes, large boxes, or other similar containers, but they could also be of another type, for example bundles of bottles or the like, or packages of paper rolls, packages of products from the ceramic industry, and others.

The dimensions and the dimensional proportions of the product packages can be any, without particular limitations; in the embodiments of the present invention, for simplicity of representation, the product packages have a substantially parallelepiped conformation.

Furthermore, the term pallet refers to the element used to support the load unit during the finishing operations of the load unit, it can be a pallet of different shapes, sizes and materials; for simplicity, the term pallet also refers to a so-called "*slipsheet*" or, in general, an element which has features that perform the function of supporting and moving the load unit.

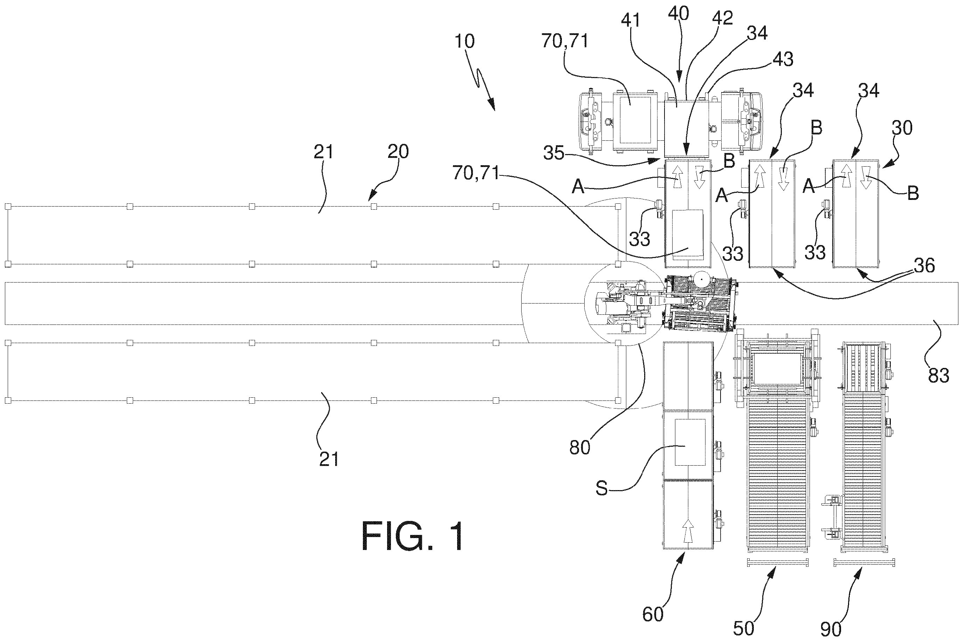

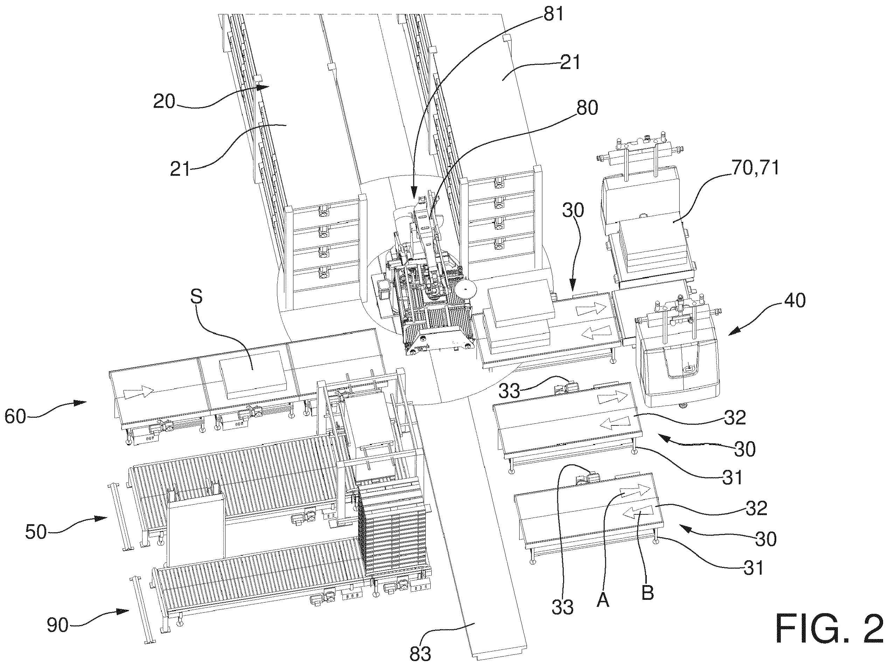

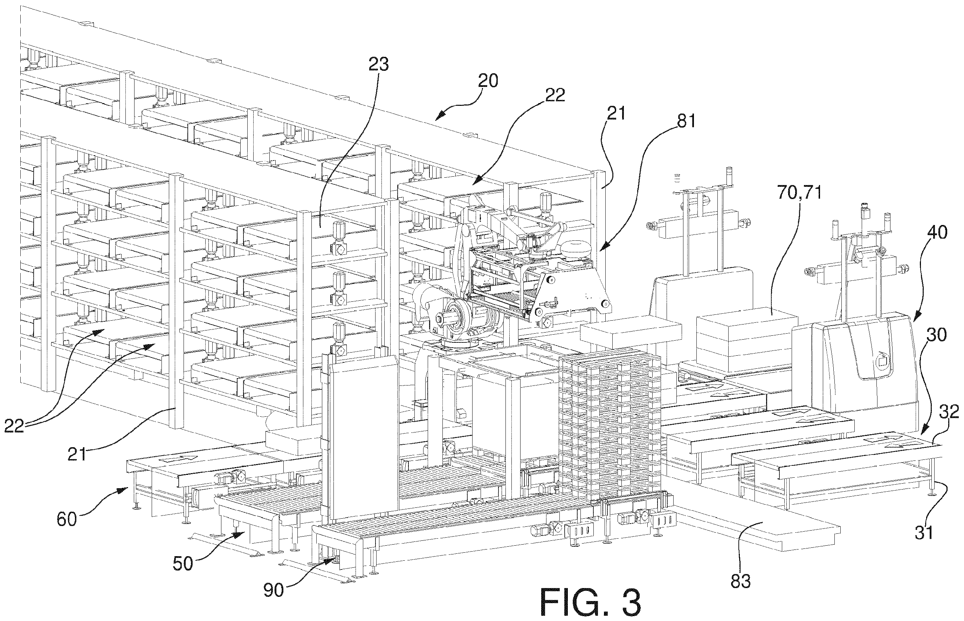

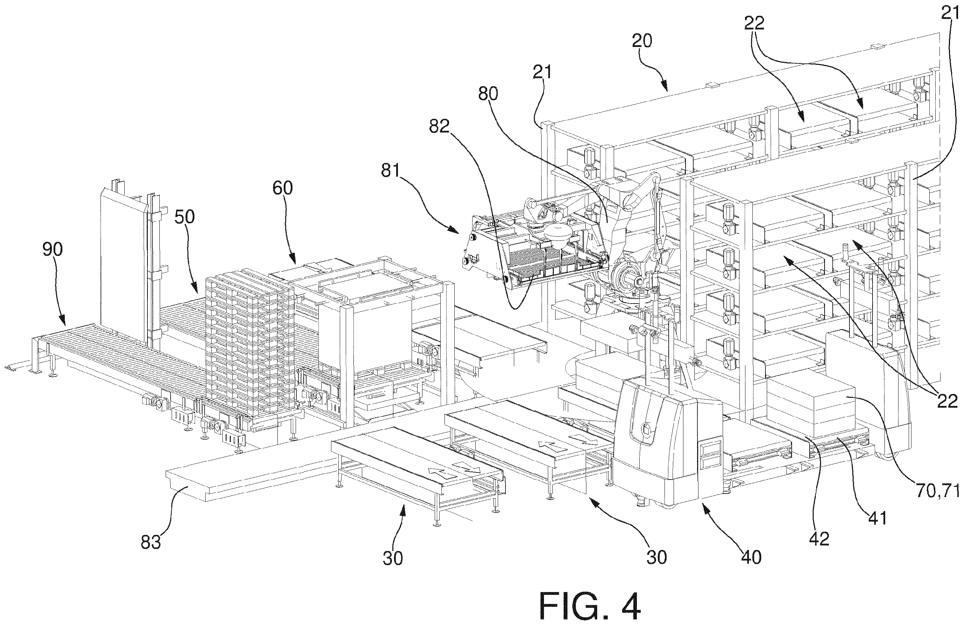

With particular reference to figures 1-4, an area of an apparatus 10 for the formation of combined load units 70 consisting of product packages of different types is shown; in the apparatus 10 the following devices are provided, some of which may also not always be present: at least one warehouse 20 for the storage of low-rotation products, one or more palletizing conveyors 30, at least one automated guided vehicle 40, for example an automated guided vehicle provided with four steering wheels, more generally an automated guided vehicle equipped with at least one conveyor, hereinafter also referred to simply as agv, at least one conveyor for piles of flaps 50, and at least an inlet conveyor 60 of single product layers coming from the palletizers P1, P2, P3.

The minimum configuration of the apparatus 10 comprises at least one palletizer P1, P2, P3, at least one palletizing conveyor 30, at least one agv 40, at least one warehouse 20 for the storage of low-rotation products, and at least one inlet conveyor 60 of single product layers.

The conveyor(s) for piles of pallets 90 and the conveyor(s) for piles of flaps 50 could also not be part of the apparatus 10.

In the embodiment of the apparatus 10 represented in the attached figures, three palletizing conveyors 30 are provided, arranged side by side to each another.

Each palletizing conveyor 30 comprises a supporting frame 31, a modular chain conveyor belt 32 and has an outer side 34 and an inner side 36.

The modular chain conveyor belt 32 is driven by motor means 33 with both directions of movement (arrow A, arrow B), allowing the outlet of the finished combined load units 70 and the inlet inside them of the partial combined load units 71 on the same side, for example the outer side 34, which can be approached by the agv 40.

In other cases, the inlet of the partial combined load units 71 can take place on the inner side 36, this side being adjacent to a device for moving the products of the warehouse 20.

The palletizing conveyors 30 being part of the apparatus 10, the conveyors internal to the palletizers P1, P2, P3 and in general the conveyors being part of the system allow to treat load units 70 without pallets, or without other types of support, to below product packages.

This feature, obtained by using the aforementioned modular chain conveyor belts 32, is due to the passage 35 having particularly reduced dimensions between the palletizing conveyor 30 and the agv 40. This feature allows to transfer the load units even of unstable and palletized packages with columnar schemes, eliminating the management of the pallets in the palletizers P1, P2, P3 and possibly in the palletizing conveyor 30 itself. A considerable simplification is therefore obtained in cases where different types of pallets are provided.

In fact, the insertion of the pallet under the finished load units 70 is done subsequently, in another device 200 provided for this purpose, i.e. before shipping or storage in the warehouse.

The transfer of the load units 70, 71 takes place by means of automated guided vehicles 40, or agvs, comprising one or more conveyors 41.

The conveyors 41 allow to reliably transfer the finished or partial combined load units 70, 71, without pallets or other types of support, between the different palletizing conveyors 30 and/or towards the other treatment areas.

This feature is obtained by using modular chain 42 conveyors 41, which define a passage 35 of particularly reduced dimensions towards the conveyor belt 32 of the palletizing conveyor 30.

The modular chain 42 conveyors 41 are of the same type as those used in the palletizing conveyors 30, and can be provided with translational devices 43 of the conveyor 41, which allow the conveyor 41 of the agv 40 to be moved and brought closer in a horizontal direction according to the same direction with respect to the advancement direction of the load units 70, 71 on the conveyor 41 to the conveyor belt 32 of the palletizing conveyor 30.

A closer approach is thus obtained with respect to the conveyors of the palletizers or in general with respect to the fixed conveyors, and thus possible positioning errors of the agv 40 are compensated in the interfacing point with the palletizing conveyor 30; these errors could therefore compromise the stability of the load unit 70, 71 in the passage from the agv 40 to the palletizing conveyor 30 and vice versa.

The conveyors 41 of the agv 40 can also comprise tilting means to allow an oscillation around a horizontal axis orthogonal to the movement direction of the load unit 70, 71.

In this case, the conveyors 41 of the agv 40 are provided with proper engagement means (not shown) which connect to complementary engagement means arranged under the conveyor belt 32 of the palletizing conveyor 30, thus allowing to obtain an always precise and constant coupling of the conveyor surfaces, regardless of the degree of wear of the agv 40 wheels or the conditions of the floor in the interfacing area, given that holes or debris could vary the height of the movement plane of the load units 70, 71 which lay on the conveyors 41 on the agv 40.

The agvs 40 can also be provided with stabilization devices (not shown) of the load units 70, 71 obtained by means of a presser to be placed on the upper side of the load units 70, 71, this presser being made with vertically movable stabilization elements.

The aforementioned stabilization elements are normally in a raised position with respect to the top of the load unit, and after the transfer of the load unit to the conveyor they drop to a height such as to come into contact with the upper part of the load unit and thus prevent its fall.

The movable stabilization elements can be multiple, to adapt to the different heights of the products that form the layer, the layers or the portion of the layer that is carrying the agv 40, and their number depends on the type of partial load units that must be realized.

Alternatively, the agvs 40 can also be provided with systems to stabilize the load units realized by means of a containment ring which stabilizes the load unit by means of lateral containment.

The aforementioned element is normally in a raised position with respect to the top of the load unit and after the transfer of the load unit to the conveyor it drops to a lower height than that of the top of the load unit, so as to avoid the fall of packages during the agv movement 40.

The mobile element can, in turn, be provided with shoulders with horizontal movement that allow to adapt their distance from the treated load unit.

The agvs 40 can also comprise devices for stabilizing the load unit by winding directly on the conveyor, before moving the agv 40 itself; the winding can be performed with plastic film, with a strap, or with other similar stabilization elements.

This film winding may be necessary if the packages to be treated are highly unstable or if the combination of the different packages of finished product to make the definitive load unit entails an instability of the load unit that cannot be resolved with the stabilizing devices described previously.

As stated, the warehouse 20 constitutes a storage area for low-rotation product packages, i.e. products that are used less frequently, and therefore allows the availability of products that are not in production at the time of formation of the load unit or products that come from other production sites or other storage sites.

The warehouse 20 comprises shelves 21 which have several stations 22 in which layers or portions of layer of low-rotation product packages are stored.

In an embodiment of the invention, the warehouse 20 comprises two opposite shelves 21, between which a space or corridor is provided.

Each station 22 comprises moving means 23 which allow to automatically insert/release the layers or portions of layer of low-rotation product packages.

The warehouse 20 comprises manipulator means 80 provided with a device for moving layers 81, suitable to move a complete layer or a portion of layer of product packages.

The device for moving layers 81 comprises a roller gripper 82 which allows the safe movement of any type of product, since the packages are always supported at each stage of the movement; the gripper 82 also allows to move and deposit not only a complete layer but also a portion of layer without problems.

The manipulator 80 can be, for example, a stacker crane, a Cartesian or anthropomorphic manipulator; alternatively, the gripper 82 can also be mounted on an automated guided vehicle. The type of manipulator 80 may depend for example on the dimensions, on the conformation and on the transferring speed required in the storage area of the warehouse 20.

In an embodiment of the invention, the device for moving layers 81 can translate along a guide 83, arranged in the space, or corridor, provided between the aforementioned two shelves 21 of the warehouse 20.

The transfer of the low-rotation product packages to the storage area is provided by the agvs 40, by transferring individual layers or a portion of layer of low-rotation products to the inlet conveyor 60 for the warehouse 20.

In the storage area of the warehouse 20, piles of pallets or other types of supports which can be stored on proper conveyors provided at stations in the warehouse 20 may also be transferred by means of the agvs 40, if needed.

In the storage area of the warehouse 20, piles of slip sheets which can be stored on other proper conveyors provided at stations in the warehouse 20 may also be transferred by means of the agvs 40, if needed.

The inlet conveyor 60 has the same features already described for the palletizing conveyors 30 and the agv 40, and essentially comprises one or more modular chain portions.

From the inlet conveyor 60 of single product layers, the layer of low-rotation products is transferred, by means of the device for moving layers 81, to the moving means 23 which can be arranged in different ways.

Since the storage of the packages takes place by single layers (or portions of layer), the storage area of the warehouse 20 can develop on several floors in height, while still maintaining limited dimensions, with respect to what would be necessary for storing a complete load unit.

The moving means 23 of the warehouse 20 also have the same features already described for palletizing conveyors 30 and agvs 40, i.e. they comprise a motorized modular chain conveyor belt to rotate in the two directions.

The device for moving layers 81 can be provided with further elements which allow to take a pallet from the piles of pallet present in the warehouse 20, or in the roller conveyor 90, and to deposit it on the palletizing conveyor 30.

The device for moving layers 81 can also be provided with elements which allow to take a slip sheet from the above-mentioned piles of flaps and to deposit it on the palletizing conveyor 30, or on the partial load unit above this conveyor.

The combined load unit 70, finished with the necessary layers, is transferred by the palletizing conveyor 30, possibly passing through outlet conveyors, to the agvs 40 for subsequent treatments.

For the management of the apparatus 10, all the elements and devices of the apparatus, palletizers, agvs, conveyors, communicate via fieldbus with a central control unit, providing the necessary information, in particular those relating to references and to the load units position and to the references and to the position of the packages present in the apparatus.

The control unit management software allows to optimize the operations starting the realization of combined load units, when the optimal conditions to avoid waiting times are present, or - if possible - communicating to the upstream conveyor control unit of the palletizers the references of the packages necessary to make the required combined load units.

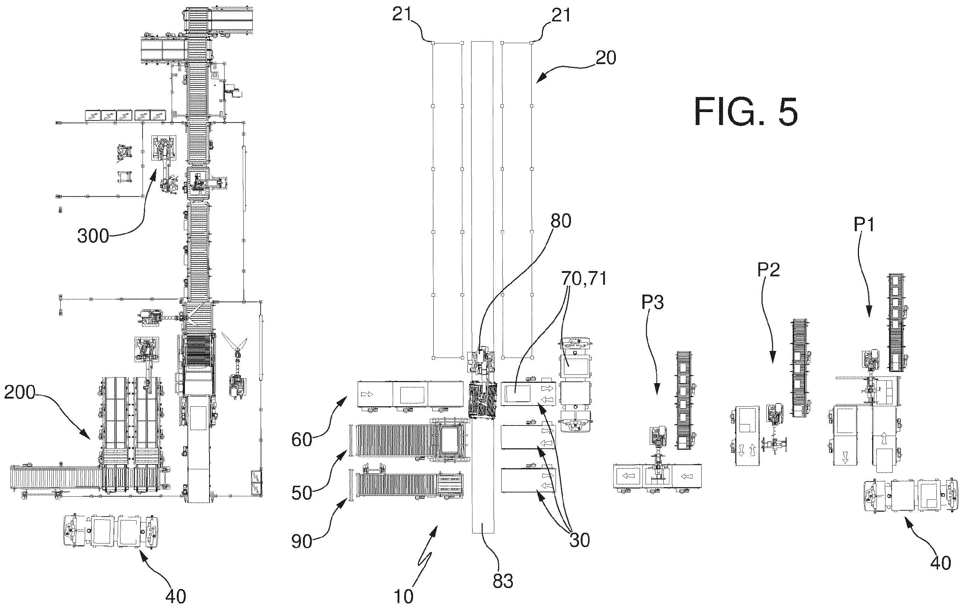

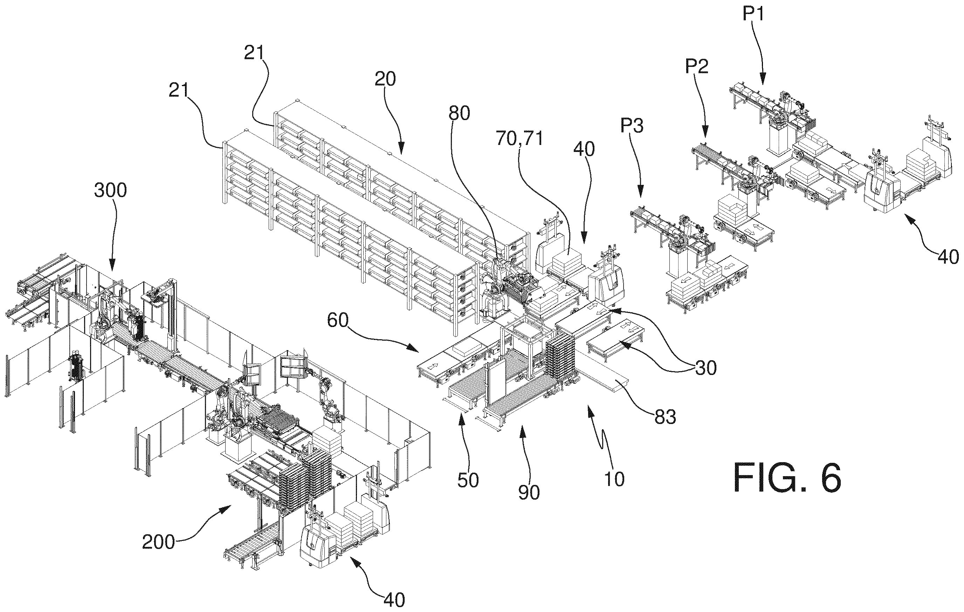

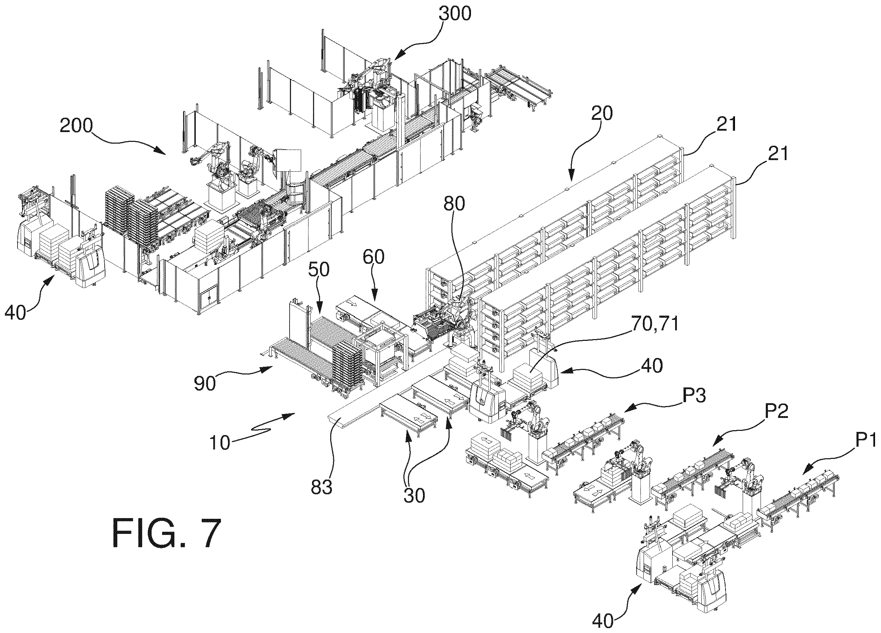

In figures 5,6,7, for illustrative and non-limiting purpose, a productive plant comprising the apparatus 10 according to the present invention is shown.

In these figures 5-7 the palletizers P1, P2, P3 are shown, which produce layers S packages C of products, i.e. partial load units 71.

Furthermore, in figures 5-7 a device for inserting a pallet 200 below the complete load units 70 is shown, and a wrapping device 300 of the complete load units 70, which can also be associated with further devices for preparing the load units 70 for shipping, such as for example those for applying labels or straps.

More in detail - and still for illustrative and non-limiting purpose - three types of palletizers P1, P2, P3 can be provided, depending on the operating mode of each one. Each of the palletizers P1, P2, P3 can have different layouts and operating modes, depending on the higher demand for the realization of combined load units with respect to the load units with uniform products.

When the need to make combined load units is more relevant than load units with uniform products, it is preferable that the palletizer has a layout and an operating mode that allows the inlet of the load unit, to which must be added the packages, independently from the outlet of the load unit to which the packages have been added, so that the palletizer is always available to receive or supply load units without downtimes.

This feature is practically obtained by arranging the palletizer so that the inlet of the partial combined load units 71 and the outlet of the finished load units 70 are sequential, as occurs in the palletizers P1 and P3.

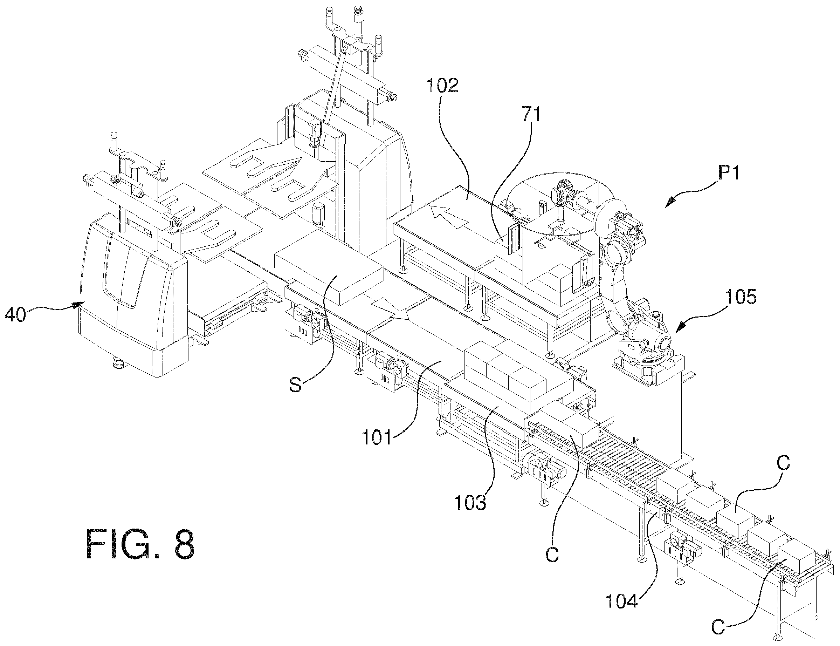

A first palletizer P1 is shown in figure 8.

The first palletizer P1 comprises two unidirectional conveyors 101, 102, arranged parallel to each other, but configured so as to advance the layers S of product packages in opposite directions.

The conveyor 101 leads the product layers S, coming from an agv 40, towards an overlapping area 103.

A further conveyor 104, aligned with the conveyor 101, along which individual packages C of products travel, which must go to compose the partial load units 71, also converges towards this area.

The conveyor 104 of the individual packages C can come directly from the production/packaging department of the specific treated products.

The first palletizer P1 further comprises also a manipulator 105 (for example, an anthropomorphic robot) provided with a gripper of layers S of products.

In practical operation, the manipulator 105 composes load units 70,71 comprising packages C coming from the conveyor 104, and possibly also layers S coming from the conveyor 101.

These partial load units 71, which are progressively composed on the conveyor 103 by the manipulator 105, are then taken by an agv 40 to then continue towards another palletizer P2, P3 or to go towards the area of the storage warehouse 20; alternatively, the load units 70, if complete, can be transferred directly to the device for inserting a pallet 200 and to the wrapping device 300, for the execution of the subsequent treatments.

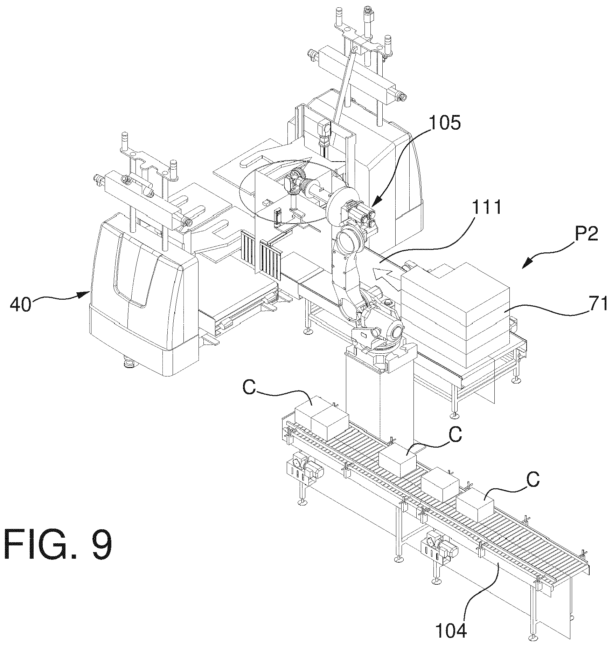

A second palletizer P2, shown in figure 9, is constructively simpler than the first palletizer P1, and differs from the previous one in that it comprises a single bidirectional conveyor 111 which is configured to move the layers S, or the partial load units 71, in two opposite directions.

The conveyor 104 of the individual packages C is arranged parallel to the bidirectional conveyor 111.

The manipulator 105, which can be interposed between this bidirectional conveyor 111 and the conveyor 104 of the packages C of individual products, or located in another proper position, then positions the packages C on layers S previously formed and coming from the agv 40, thus forming partial load units 71.

At the end of the operation, the load units 71, conveyed by the same conveyor 111, position themselves again on the agv 40 to continue towards the subsequent operating steps.

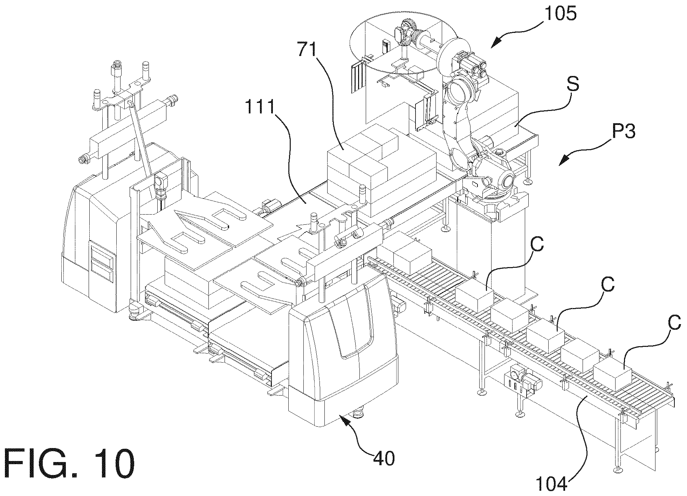

A third palletizer P3, shown instead in figure 10, is characterized in that the unidirectional conveyor 111 is oriented in such a way as to be able to receive the input load units 70,71 and independently transfer the output ones (for example, at the same time an agv 40 could transfer a load unit 70,71 from the input transport, and another agv 40 could receive one finished by the output one).

As mentioned, the three described and illustrated palletizers P1, P2, P3 represent only non-limiting examples of the types of palletizers that can be used in the apparatus 10 according to the present invention, which allow to compose partial load units 71 or complete load units 70 variously arranged in relation to different production needs.

The method according to the present invention provides a step in which the agv 40 brings on its conveyor 42 at least one layer, or portion of layer, of a type of products taken from a production or storage site of the factory or warehouse where the agv 40 is operating.

The agv 40 then transfers a layer, or portion of layer, on the inlet conveyor 60, the manipulator 80 takes this layer, or portion of layer, by means of the device for moving layers 81, and deposits it on the pallet or on the layers present on the pallet waiting on the palletizing conveyor 30.

The device for moving layers 81 can also take a layer, or portion of layer, from the warehouse 20 and deposit it as previously on the pallet, or on the layers present on the pallet, waiting on the palletizing conveyor 30.

In general, there may be three ways of realization of complete load units 70.

According to a first way, the complete load unit 70 is entirely realized by first positioning, on the palletizing conveyor 30, an empty pallet, and subsequently, on the latter, the desired product layers.

In a second way, the complete load unit 70 is made by completing, with the desired product layers, a partial load unit 71 coming from the palletizers P1, P2, P3, and positioned on the palletizing conveyor 30.

In this case, the partial load unit 71 can be composed of layers of uniform products or even layers of non-uniform products, because it was previously composed for successive movements through the different palletizers P1, P2, P3.

Once the pile of layers of product packages has been finished, which may be a partial load unit 71 or a complete load unit 70, on the palletizing conveyor 30, by means of the device for moving layers 81, the agv 40 takes the load unit 70, 71 and possibly brings it to one of the palletizers P1, P2, P3, or to the completion of the load unit.

In a third embodiment, the complete load unit 70 is created using only the palletizers P1, P2, P3, without the need to add further layers in the area of the warehouse 20.

The complete combined load units 70 can therefore be transferred to a device for inserting pallet 200 and/or possibly to wrapping devices 300, strapping machines and machines for applying labels, or more generally to the treatments required for shipping.

The method for the realization of the combined load units 70,71 therefore provides a direct formation of the load units by means of one or more palletizers P1, P2, P3, or the palletizing conveyor 30, avoiding a prior palletizing and a subsequent depalletizing of the uniform load units.

Therefore, with this method, in each palletizer P1, P2, P3 or palletizing conveyor 30 only the quantity of product packages strictly necessary to compose the complete combined load unit 70 is palletized.

These operations follow one another on several palletizing conveyors 30, or on different palletizers P1, P2, P3, based on what the composition of the final combined load unit 70 requires, until the completion of the same load unit, according to the order of a customer.

The method also provides the possibility of transferring packages of finished product from the palletizers P1, P2, P3 to the storage area of the warehouse 20, to make the packages of products available independently of those in production at a given time.

This possibility is particularly important for low-rotation product packages and allows the combined load units to be finished without waiting times and without the need for storage of the entire load unit.

The invention thus conceived allows then the achievement of important advantages.

The combined load units 70 are made using directly the packages coming from the production or packaging departments, without having to palletize, wrap or label complete load units.

Furthermore, there is no waste of material for the stabilization/identification of the combined load units 70 (plastic film, straps, labels, etc.), nor energy waste for the movement of the load units intended for the realization of the combined load units 70.

Thanks to the proposed solution, there is no need for depalletizers to take layers or packages from the uniform load units, nor for dedicated palletizers to make the combined load units 70.

From the point of view of the overall dimensions, it is no longer necessary to provide treatment areas for uniform load units intended for the realization of combined load units 70 (removal of stabilization materials, shape control, etc.), nor storage areas for treated load units (unwrapped or unstrapped).

The apparatus according to the invention guarantees great operating flexibility, since there are no limits in the types of products that can be treated, nor constraints in relation to the dimensions of the layers of the combined load unit, or to the reliability of such treatment: in fact, if these products are treatable by the palletizer which normally performs the load units of uniform products, then they can also be treated for the creation of combined load units.

It is also added that there are no limits with regards to the manageable palletizing schemes. In particular, the apparatus allows the management of schemes for subsequent insertion on half pallets or quarter pallets, or in general on fractions of pallets, which with the traditional systems mentioned would not be possible, or in any case would be very difficult to obtain.

Another advantage consists in the fact that the palletizers included in the apparatus 10 can be simplified from the constructive point of view, since the management of the pallets (or of other equivalent supports of the load units) can be eliminated: in fact the pallet is introduced into the process only downstream of the aforementioned palletizers.

The same applies to the management of the slip sheets which, for some types of products, could be eliminated, or could be introduced only downstream of the palletizers.

The present invention has been described according to preferred embodiments; however, equivalent variants can be conceived without departing from the scope of protection defined by the following claims.

## Claims

1. Apparatus (10) for the formation of combined load units (70) consisting of product packages of different types, comprising one or more palletizers (P1, P2, P3), and at least one automated guided vehicles (40), **characterized in that** it comprises at least one inlet conveyor (60) of single product layers, at least one palletizing conveyor (30) provided with at least one conveyor belt (32), manipulator means (80) provided with a device for moving layers (81), suitable to move a complete layer or a portion of layer of product packages, and at least one warehouse (20) for storing low-rotation products.

2. Apparatus (10) according to claim 1, wherein said warehouse (20) comprises shelves (21) which have several stations (22) in which layers or portions of layer of low-rotation product packages are stored.

3. Apparatus (10) according to the preceding claim, wherein each of said stations (22) comprises moving means (23) which allow to automatically insert/release the layers, or portions of layer, of low-rotation product packages.

4. Apparatus (10) according to any of the preceding claims, wherein said at least one automated guided vehicle (40) comprises at least a conveyor (41).

5. Apparatus (10) according to one of the preceding claims, wherein said device for moving layers (81) comprises a roller gripper (82).

6. Apparatus (10) according to claim 4 or 5, wherein said automated guided vehicle (40) comprises engagement means which connect to complementary engagement means arranged in said palletizing conveyor (30), so as to allow a precise and constant coupling between said at least one conveyor (41) of the automated guided vehicle (40) and said at least one conveyor belt (32) of said palletizing conveyor (30).

7. Production plant, comprising at least one apparatus (10) according to one of claims 1-6, at least one device for inserting the pallet (200) below the complete load units (70) and at least one wrapping device (300) of the complete load units (70).

8. Method for producing a combined load unit (70) by means of an apparatus (10) according to one of claims 1 to 6, comprising the steps of:
a) bringing on the conveyor (42) of an automated guided vehicle (40) at least one layer, or a portion of layer, or a partial load unit (71), of one or more types of products taken from a site of production or storage of the factory or warehouse in which said automated guided vehicle (40) operates;
b) transferring said layer, or portion of layer, of product packages onto said inlet conveyor (60);
c) depositing said layer, or portion of layer, coming from said inlet conveyor (60), into said warehouse (20);
d) depositing, by means of said manipulator (80), a pallet on said palletizing conveyor (30);
e) taking, by means of said manipulator (80), said layer, or portion of layer, from said warehouse (20), by means of the device for moving layers (81);
f) depositing said layer, or portion of layer, taken from said warehouse (20), on said pallet or on the layers present on said pallet waiting on said palletizing conveyor (30); and
g) repeating the previous steps a)-e) until a combined load unit (70) positioned on a pallet is obtained.

9. Method for producing a combined load unit (70) by means of an apparatus (10) according to one of claims 1 to 6, comprising the steps of:
a) bringing on the conveyor (42) of an automated guided vehicle (40) at least one layer, or a portion of layer, or a partial load unit (71), of one or more types of products taken from a site of production or storage of the factory or warehouse in which said automated guided vehicle (40) operates;
b) transferring said layer, or portion of layer, of product packages onto said inlet conveyor (60);
c) depositing said layer, or portion of layer, coming from said inlet conveyor (60), into said warehouse (20);
d) by means of said at least one automated guided vehicle (40), depositing one or more overlapping layers, or a portion of layer, on said palletizing conveyor (30);
e) by means of said manipulator (80) taking said layer from said warehouse (20), by means of the device for moving layers (81);
f) depositing said layer, taken from said warehouse (20), on said one or more overlapping layers present waiting on said palletizing conveyor (30).

10. Method for producing a combined load unit (70) by means of an apparatus (10) according to one of claims 1 to 6, comprising the steps of:
a) bringing on the conveyor (42) of an automated guided vehicle (40) at least one layer, or a portion of layer, or a partial load unit (71), of one or more types of products taken from a site of production or storage of the factory or warehouse in which said automated guided vehicle (40) operates;
b) transferring said layer, or portion of layer, of product packages onto said inlet conveyor (60);
c) by means of said at least one automated guided vehicle (40), depositing one or more overlapping layers, or a layer portion, on said palletizing conveyor (30);
d) by means of said manipulator (80) taking said layer from said inlet conveyor (60), by means of the device for moving layers (81);
e) depositing said layer, taken from said inlet conveyor (60), on said one or more overlapping layers present waiting on said palletizing conveyor (30).

11. Method according to claim 8 or 9 or 10, comprising a step of realizing said partial load unit (71) by means of one or more of said palletizers (P1, P2, P3), using product packages (C) or layers (S) of packages (C), complete or partial, progressively overlapping coming directly from the production departments of a production plant.

12. Method according to claim 11, wherein said partial load unit (71) is produced by means of at least two of said palletizers (P1, P2, P3) which, in sequence one after the other, compose respective layers (S) of product packages (C), complete or partial, coming directly from the production departments of a production plant.

13. Method according to claim 8, comprising a step of taking, by means of said manipulator (80), at least one layer, or portion of layer, of low-rotation product packages from said warehouse (20), to compose said partial load unit (71).
